# EUROPEAN PATENT APPLICATION

(11) **EP 3 446 557 A2**
(43) Date of publication of application: **27.02.2019**
(21) Application number: 18189956.8
(22) Date of filing: 21.08.2018
(51) Int. Cl.: A01D 34/44

(54) **STAND ON MOWER WITH MULTIPLE CUTTING UNITS**

(30) Priority: 25.08.2017 US 201715687412
(71) Applicant: Deere & Company, Moline, IL 61265 (US)
(72) Inventor: Bagwan, Rajesaheb, 68163 Mannheim (DE); Henson, Robert, 68163 Mannheim (DE); Evans, Mark D, 68163 Mannheim (DE); Gade, Abhijit, 68163 Mannheim (DE); Appaian, Thirumal, 68163 Mannheim (DE)
(74) Representative: Reichert, Christian

(57) **Abstract**

A stand on mower (100) with multiple cutting units (102, 104, 106) including a front cutting unit (102) positioned behind a pair of front wheels (108, 110) extending laterally outwardly from a vehicle frame (146), and a pair of rear cutting units (104, 106) positioned behind the front cutting unit (102) and extending laterally outwardly from under the vehicle frame (146). Each cutting unit is connected to a lift arm (134, 136, 138) that raises and lowers the cutting unit between a mowing position and a transport position. A standing operator platform (126) is positioned between a pair of traction drive wheels (182, 184) behind the pair of rear cutting units, with the platform positioned below the vehicle frame (146).

## Description

This invention relates to grass mowing machines, and specifically to stand on mowers with multiple cutting units for mowing golf courses and ball fields.

Triplex greensmowers with three cutting reels, and fairway mowers with five cutting reels, provide a high quality cut at a specified grass length on golf course greens, ball fields and other areas where a high quality cut is needed. Triplex greensmowers and fairway mowers typically weigh more than about 1000 pounds and have a length of 100 inches or more. There is a need for a mower with multiple cutting reels that is lighter, smaller, less costly and more maneuverable than conventional triplex greensmowers and fairway mowers.

Trim mowers used for mowing golf course rough, trim and surrounds may have three cutting units with cutting reels or rotary blades. Trim mowers may include mechanisms for shifting one or more cutting units closer to sensitive areas around hazards, so the weight of the mower does not compact the soil or damage the turf. There is a need for a trim mower that can mow a variety of different areas including sensitive areas around hazards without shifting any of the cutting units.

Riding mowers with a stand on operator station have been used for commercial mowing applications where an operator can easily step off the mower. These stand on mowers have a mowing deck with multiple cutting blades positioned in front of the operator station, but do not provide a high quality cut that is required for golf courses and ball fields. There is a need for a stand on mower that can produce a high quality cut, and that allows an operator to easily step off the mower to take care of items such as tee markers, bunker rakes, tools, branches, or debris.

A stand on mower with multiple cutting units including a front cutting unit behind a pair of front wheels, and left and right rear cutting units positioned behind the front cutting unit and forwardly of a pair of rear drive wheels. A stand on operator platform is provided between the rear drive wheels, with an internal combustion engine in front of the stand on operator platform.
Fig. 1 is a top perspective view of a stand on mower with multiple cutting units according to a first embodiment of the invention.
Fig. 2 is a side perspective view of a stand on mower with multiple cutting units in a lowered or mowing position according to a first embodiment of the invention.
Fig. 3 is a side perspective view of a stand on mower with multiple cutting units in a raised or transport position according to a first embodiment of the invention.
Fig. 4 is a bottom view of a stand on mower with multiple cutting units according to a first embodiment of the invention.
Fig. 5 is a perspective view of a stand on mower with multiple cutting units according to a second embodiment of the invention.

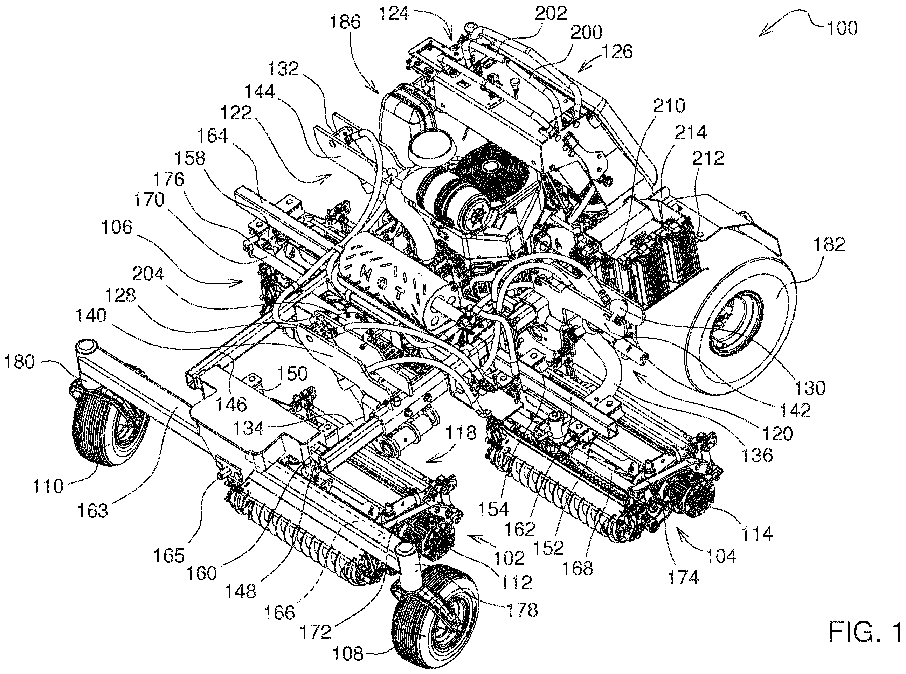

In one embodiment shown in Figs. 1-4, stand on mower 100 may include multiple cutting units, such as front cutting unit 102 and left and right rear cutting units 104, 106. The front cutting unit may be positioned rearwardlly behind a pair of front wheels 108, 110. , The left and right rear cutting units may be positioned side by side behind the front cutting unit, and the gap or spacing between the rear cutting units may be less than the width of the front cutting unit. Each cutting unit may include a cutting reel having multiple spiral or helix profile blades rotating in close proximity to a bedknife, and powered by an electric brushless reel motor 112, 114, 116 or hydraulic motor mounted to the side of the cutting unit. Alternatively, each cutting unit may include a rotary blade attached to the lower end of a spindle extending through a dish-shaped cutting chamber.

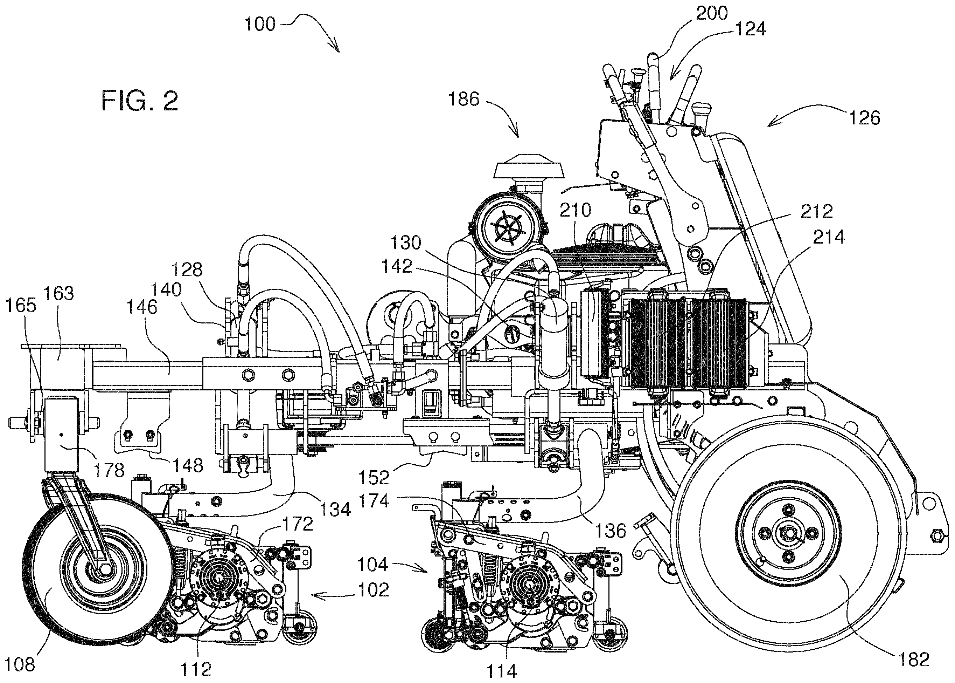

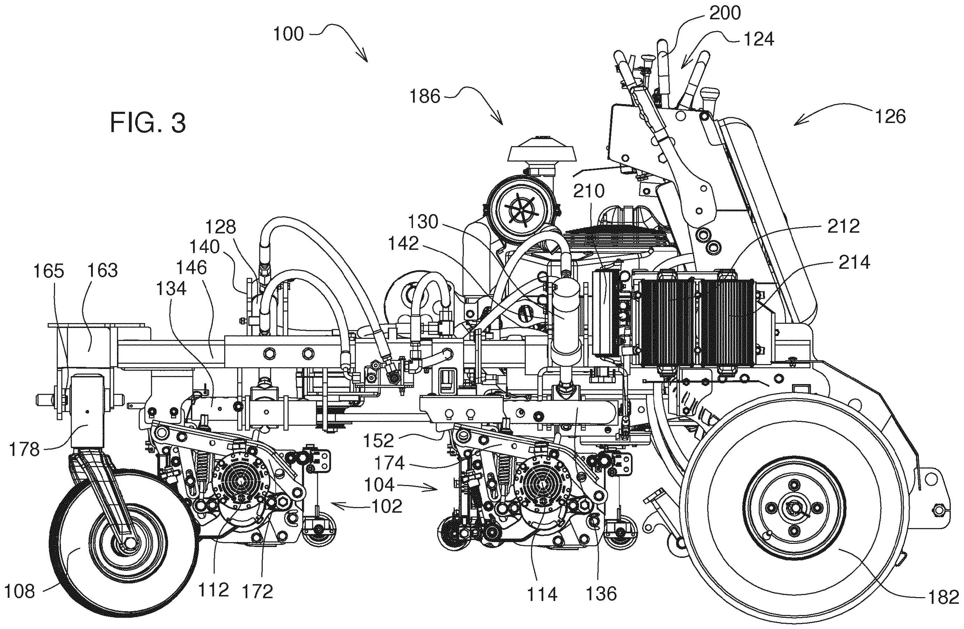

In one embodiment, stand on mower 100 may have a lift/lower mechanism 118, 120, 122 for each of the multiple cutting units. Each lift/lower mechanism may be operated with controls 124 located in standing operator station 126 for moving each cutting unit between a lowered or mowing position shown in Fig. 2 and a raised or transport position shown in Fig. 3. For example, each lift/lower mechanism may include a hydraulic or electric lift cylinder 128, 130, 132 positioned between a lift arm 134, 136, 138 and bracket 140, 142, 144 attached to the stand on triplex mower frame 146. Each lift/lower mechanism may operate independently of the others so that the operator may mow with only a front cutting unit and/or only one of the rear cutting units if necessary or desirable.

In one embodiment, stand on mower 100 may include traction vehicle frame 146 having one or more stops 148, 150 for cutting unit 102, one or more stops 152, 154 for cutting unit 104, and one or more stops 158 for cutting unit 106. The stops may be used to hold the cutting unit still and prevent the cutting unit from swinging or contacting the turf when the cutting unit is in the raised or transport position. For example, each stop may include a pad that may be rubber or other resilient material attached to a laterally extending member 160, 162, 164 attached to the frame. When a cutting unit is raised to the transport position, front crossbar 166, 168, 170 on the cutting unit may come into contact with the pair of stops. For example, each front crossbar may be connected between a pair of yokes 172, 174, 176 of a reel cutting unit.

In one embodiment, stand on mower 100 may include a pair of front wheels 108, 110, which may be steerable, or may be a caster wheel that swivels on a vertical pivot axis 178, 180 attached to the left side or right side of front frame member or axle 163. The front frame member or axle may be pivotably mounted to the vehicle frame on a generally horizontal pivot axis 165. The front frame member or axle may extend laterally outwardly from vehicle frame 146 on each side of the stand on triplex mower. The vertical pivot axis for each front wheel may be positioned a sufficient distance away from the front cutting unit so that each front wheel may pivot completely without contacting the cutting unit or frame. As a result, the gap between front wheels 108, 110 may be wider than the gap between rear traction drive wheels 182, 184.

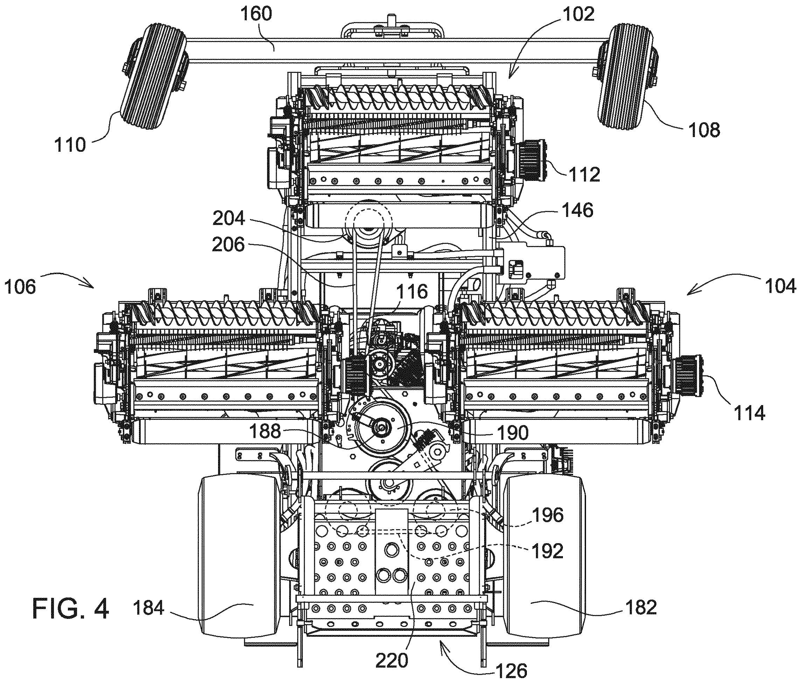

In one embodiment, stand on mower 100 may include internal combustion engine 186 mounted on the traction vehicle frame in front of standing operator station 126. As shown in Fig.4, the internal combustion engine may have a vertical output or drive shaft 188 and a clutch pulley 190 that drives a first belt 192 for variable displacement dual hydraulic pump 194. Each side of the pump may provide hydraulic fluid to one of hydraulic motors 196, 198 to rotate one of the rear traction drive wheels at a desired speed. The left side of the variable displacement hydrostatic pump and right side of the variable displacement hydrostatic pump may provide pressurized hydraulic fluid through conduits to the left hydrostatic motor and the right hydrostatic motor respectively so that the motors may rotate each the machine's rear traction drive wheels in either forward or reverse.

In one embodiment, the stand on mower may have an operator station 126 with hand levers 200, 202 operating independently of each other, so that one of the hand levers may be in a forward drive position and the other may be in a reverse drive position. The operator station also may have a platform 220for the operator to stand on substantially between the rear traction drive wheels, at an elevation lower than vehicle frame 146 to provide stability. Additionally, one or more stationary bars may be positioned in front of the operator on the operator station positioned adjacent or forwardly of the rear drive wheels, so that an operator may grip the stationary bar with both hands while in a standing position. In an alternative embodiment, instead of a variable displacement dual hydraulic pump and hydraulic motors, the stand on triplex mower may include electric motors for each traction drive wheel, and each hand lever may be electrically connected to each motor and provide electronic signals to command the speed and direction of each electric motor.

In one embodiment, stand on mower 100 may include alternator 204 that is driven by second belt drive attached to clutch pulley 190. The alternator may be mounted to the frame forwardly of the engine and between the front cutting unit and pair of rear cutting units. The alternator may generate electric power to run the electric motor for each cutting unit. For example, each of the three cutting reels may be rotated by a brushless electric motor. Electronic motor controllers 210, 212, 214 may be provided for each of the electric cutting unit motors.

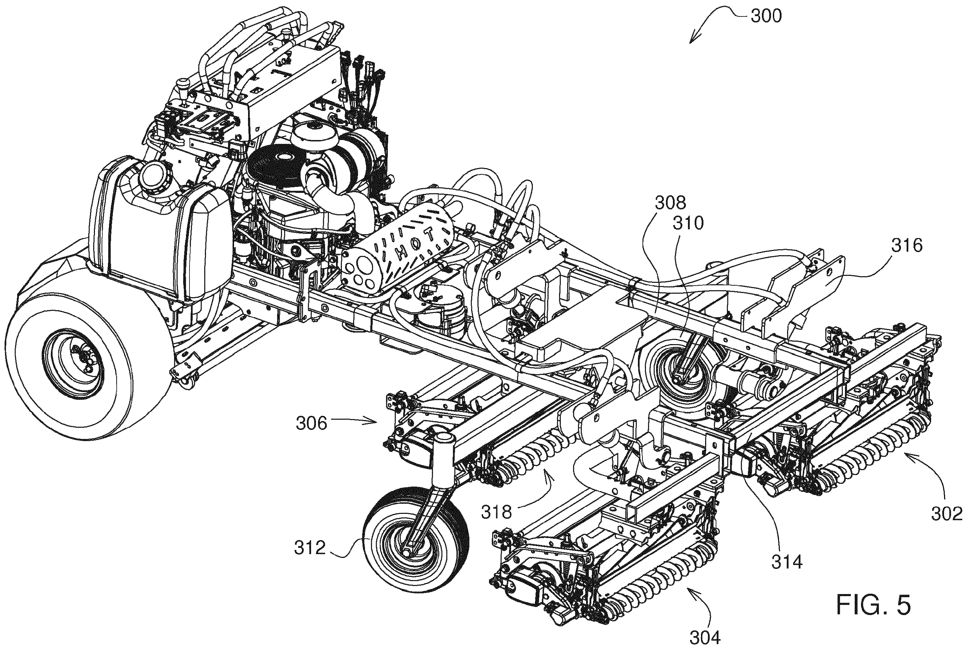

In a second embodiment, shown in Fig. 5, stand on mower 300 may include two or more front cutting units 302, 304 and one or more rear cutting units 306. For example, the stand on mower may include three rear cutting units. The front cutting units may be positioned in front of front wheels 310, 312 and the rear cutting units may be positioned behind the front wheels. To support the front cutting units, frame members 308 may extend forwardly from the front wheels to cross member 314.

Having described the preferred embodiment, it will become apparent that various modifications can be made without departing from the scope of the invention as defined in the accompanying claims.

## Claims

1. A stand on mower comprising:
a front reel cutting unit positioned behind a pair of front wheels;
left and right rear reel cutting units positioned behind the front reel cutting unit and
forwardly of a pair of rear drive wheels; and
a stand on operator platform between the rear drive wheels.

2. The stand on mower of claim 1 further comprising an internal combustion engine in front of the stand on operator platform.

3. The stand on mower of claim 1 further comprising a plurality of lift arms that raise and lower the reel cutting units between a mowing position and a transport position.

4. The stand on mower of claim 1 further comprising at least one stop contacting each reel cutting unit when the cutting unit is in the transport position.

5. The stand on mower of claim 1 further comprising a belt drive alternator providing electrical power to the reel cutting units.

6. The stand on mower of claim 1 wherein the pair of front wheels are mounted to a pivoting front axle.

7. A stand on mower comprising:
a plurality of cutting units positioned under a traction vehicle frame;
a plurality of lift arms connected to the frame to raise and lower the cutting units independently between a mowing position and a transport position; and
an operator station including a platform to stand on behind the plurality of cutting units and at an elevation lower than the frame.

8. The stand on mower of claim 7 wherein each of the plurality of cutting units includes a cutting reel.

9. The stand on mower of claim 7 wherein one of the plurality of cutting units is a front cutting unit positioned between a pair of front wheels.

10. The stand on mower of claim 9 wherein each of the front wheels swivels on a vertical axis positioned on a front frame member extending laterally outwardly from the vehicle frame.

11. The stand on mower of claim 7 further comprising a belt drive alternator mounted to the frame and providing electrical power to the plurality of cutting units.

12. A stand on mower comprising:
a front cutting unit positioned behind a pair of front wheels extending laterally outwardly from a vehicle frame, the front cutting unit connected to a lift arm that raises and lowers the front cutting unit between a mowing position and a transport position;
a pair of rear cutting units positioned behind the front cutting unit and extending laterally outwardly from under the vehicle frame, each rear cutting unit connected to a lift arm that raises and lowers the rear cutting unit between a mowing position and a transport position; and
a standing operator platform positioned between a pair of traction drive wheels behind the pair of rear cutting units, the platform positioned below the vehicle frame.

13. The stand on mower of claim 12 further comprising an internal combustion engine positioned on the frame in front of the standing operator platform.

14. The stand on mower of claim 12 further comprising a belt driven alternator providing electrical power to an electric motor on each cutting unit.

15. The stand on mower of claim 12 wherein each cutting unit is a cutting reel.
